# FASCICULE DE BREVET EUROPEEN

(11) **EP 2 771 172 B1**
(45) Date de publication et mention de la délivrance du brevet: **17.04.2019**
(21) Numéro de dépôt: 12787805.6
(22) Date de dépôt: 23.10.2012
(51) Int. Cl.: B29C 70/32, B29C 70/54, B29C 53/56, B29C 53/80, B29L 31/00

(54) **DISPOSITIF DE MAINTIEN D'UNE TEXTURE FIBREUSE SUR UN MANDRIN D'IMPREGNATION D'UNE MACHINE D'ENROULEMENT**
VORRICHTUNG ZUM HALTEN EINER FASERIGEN TEXTUR AUF EINEMIMPRÄGNIERUNGSFORMER EINER WICKELMASCHINE
DEVICE FOR HOLDING A FIBROUS TEXTURE ON AN IMPREGNATION FORMER OF A WINDING MACHINE

(30) Priorité: 26.10.2011 FR 1159713
(43) Date de publication de la demande: 03.09.2014
(73) Titulaire: Safran Aircraft Engines, 75015 Paris (FR)
(72) Inventeur: MATHON, Richard, 91800 Brunoy (FR); PATRIGEON, Olivier, F-92000 Nanterre (FR); GUMMEL, Micah, East Kingston, NH 03827 (US)
(74) Mandataire: Boura, Olivier
(86) Numéro de dépôt international: PCT/FR2012/052423
(87) Numéro de publication internationale: WO 2013/060978

(56) Documents cités:
- US-A- 4 388 263
- US-A- 5 597 435
- US-A1- 2007 272 346
- US-A1- 2008 169 579

## Description

### Arrière-plan de l'invention

La présente invention se rapporte au domaine général de la réalisation de carters de turbine à gaz en matériau composite, et plus particulièrement de carters de rétention pour soufflante de turbine à gaz pour moteurs aéronautiques.

Dans un moteur aéronautique à turbine à gaz, un carter de soufflante remplit plusieurs fonctions : il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce dernier constitue un piège retenant les débris, tels que des objets ingérés ou des fragments d'aubes endommagées, projetés par la centrifugation, afin d'éviter qu'ils traversent le carter et atteignent d'autres parties de l'aéronef.

De façon courante, un carter de rétention de soufflante est formé par une paroi relativement mince définissant la veine d'entrée d'air et supportant un matériau abradable au droit de la trajectoire des sommets des aubes de soufflante et le revêtement de traitement acoustique éventuel, et par une structure de bouclier fixé sur cette paroi du côté extérieur, au niveau de la soufflante.

La réalisation d'un carter de rétention de soufflante en matériau composite a déjà été proposée. On pourra par exemple se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Plus précisément, ce document prévoit d'utiliser un mandrin d'appel pour le tissage tridimensionnel de la texture fibreuse, celle-ci étant ensuite enroulée en couches superposées sur un mandrin d'imprégnation présentant une surface extérieure dont le profil correspond à celui de la partie centrale du carter à fabriquer et deux flasques latéraux correspondant à des brides de fixation du carter. La préforme fibreuse ainsi obtenue est maintenue sur le mandrin d'imprégnation et une imprégnation par résine est réalisée avant polymérisation.

La mise en oeuvre pratique de ce procédé pose le problème du transfert de la texture fibreuse depuis le mandrin d'appel vers le mandrin d'imprégnation. Pour résoudre ce problème, la Demanderesse a proposé dans la demande de brevet français FR 2 974 026 une machine d'enroulement permettant d'assurer, lors du transfert de la texture fibreuse depuis le mandrin d'appel vers le mandrin d'imprégnation, à la fois un placement correct de la texture fibreuse sur le mandrin d'imprégnation et l'application d'une tension d'enroulement adéquate.

Avec une telle machine, se pose le problème du maintien de la texture fibreuse sur le mandrin d'imprégnation au démarrage de l'enroulement. En effet, l'enroulement étant réalisé directement sur le mandrin qui servira à l'imprégnation par la résine, celui-ci est lisse et ne présente donc aucun moyen d'accroche en surface. Ce problème de maintien de la texture fibreuse sur le mandrin d'imprégnation se pose également en fin d'enroulement où, avant d'être coupée à sa longueur finale, la préforme fibreuse doit être maintenue en évitant de perdre la tension appliquée à la texture lors de son enroulement.

Par conséquent, un besoin existe de disposer d'un outillage permettant d'assurer le maintien de la texture fibreuse sur le mandrin d'imprégnation au démarrage et à la fin de l'enroulement.

On connait en outre US 2007/272346 qui divulgue un dispositif pour consolider un tissu autour d'un mandrin.

### Objet et résumé de l'invention

La présente invention a donc pour but principal de pallier un tel besoin en proposant un dispositif selon la revendication 1.

Le dispositif selon l'invention est remarquable en ce qu'il permet d'assurer un maintien par serrage (ou pincement) de la couche de texture fibreuse enroulée sur le mandrin d'imprégnation d'une machine d'enroulement. Le dispositif permet ainsi de maintenir la préforme fibreuse sur le mandrin d'imprégnation au démarrage de l'enroulement, mais également en fin d'enroulement en maintenant une tension d'enroulement suffisante sur la texture fibreuse.

Par ailleurs, la présence du patin central et des deux patins latéraux permet d'appliquer un effort de serrage sur la couche de texture fibreuse non seulement sur toute sa largeur, mais également dans les coins de celle-ci (qui correspondent aux brides du carter).

Enfin, le dispositif selon l'invention présente l'avantage de pouvoir être fixée sur les flasques latéraux du mandrin d'imprégnation, ce qui le rend aisément amovible.

De préférence, le dispositif comprend en outre une plaque de répartition de pression destinée à être intercalée entre les patins et la couche de texture fibreuse enroulée sur le mandrin. La présence de cette plaque permet d'assurer une répartition de l'effort de serrage exercé par les patins sur toute la largeur de la couche de texture fibreuse.

Cette plaque de répartition de pression comprend avantageusement des zones flexibles de façon à lui permettre d'épouser le profil de la surface extérieure du mandrin. Par exemple, la plaque de répartition de pression peut être réalisée dans un matériau plastique et les zones flexibles peuvent présenter des rainures pratiquées dans l'épaisseur de la plaque.

Chaque patin est fixé au porte-patin par un système vis-écrou actionnable par une manivelle de serrage de façon à pouvoir exercer un effort de serrage dudit patin sur la couche de texture fibreuse enroulée sur le mandrin.

L'invention a également pour objet une machine d'enroulement d'une texture fibreuse sur un mandrin d'imprégnation, comprenant un mandrin d'appel sur lequel est destiné à être stockée une texture fibreuse obtenue par tissage tridimensionnel, le mandrin d'appel ayant un axe de rotation sensiblement horizontal, un mandrin d'imprégnation sur lequel est destinée à être enroulée en couches superposées la texture fibreuse stockée sur le mandrin d'appel, le mandrin d'imprégnation ayant un axe de rotation sensiblement horizontal et parallèle à l'axe de rotation du mandrin d'appel, des moteurs électriques pour entraîner en rotation les mandrins autour de leur axe de rotation respectif, une unité de commande des moteurs électriques d'entraînement en rotation des mandrins, et au moins un dispositif de maintien de la texture fibreuse sur le mandrin d'imprégnation tel que défini précédemment.

De préférence, la machine d'enroulement comprend deux dispositifs de maintien de la texture fibreuse sur le mandrin d'imprégnation, lesdits dispositifs étant espacés angulairement l'un de l'autre autour de l'axe de rotation du mandrin d'imprégnation.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue de côté d'une machine d'enroulement d'une texture fibreuse sur un mandrin d'imprégnation comprenant un dispositif de maintien selon l'invention ;
- les figures 2 et 3 sont des vues du dispositif de maintien de la figure 1 ; et
- la figure 4 est une vue schématique du mandrin d'imprégnation de la machine d'enroulement de la figure 1 montrant les emplacements possibles du dispositif de maintien selon l'invention.

### Description détaillée d'un mode de réalisation

L'invention sera décrite ci-après dans le cadre de son application à la fabrication d'un carter de soufflante de moteur aéronautique à turbine à gaz.

Un exemple de procédé de fabrication d'un tel carter de soufflante est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Brièvement, le procédé de fabrication décrit dans ce document consiste à réaliser une texture fibreuse par tissage tridimensionnel avec appel en chaîne sur un tambour (appelé ci-après mandrin d'appel) ayant un profil déterminé en fonction du profil du carter à fabriquer.

La texture fibreuse ainsi réalisée est ensuite transférée sur le mandrin d'un moule d'injection de résine (ci-après appelé mandrin d'imprégnation) dont le profil extérieur correspond au profil interne du carter à fabriquer.

La préforme étant maintenue sur le mandrin d'imprégnation, une imprégnation est alors réalisée par une résine. A cet effet, une enveloppe est appliquée sur la préforme et la résine est injectée dans le moule ainsi constitué. L'imprégnation peut être assistée par établissement d'une différence de pression entre l'intérieur et l'extérieur du moule dans lequel se trouve la préforme. Après imprégnation, une étape de polymérisation de la résine est réalisée.

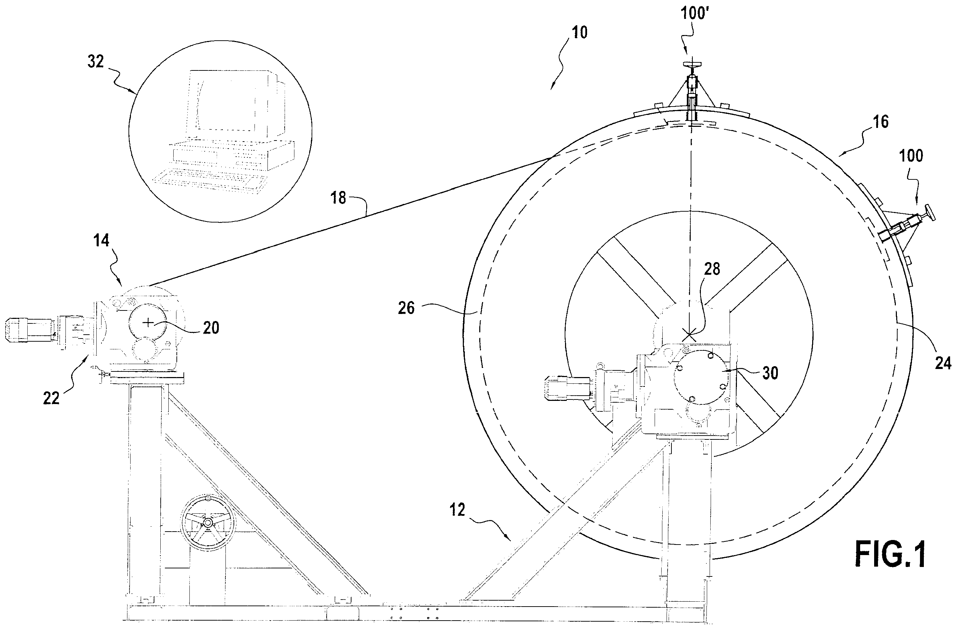

L'invention s'applique à tout type de machine d'enroulement ayant pour fonction de permettre un transfert automatisé de la texture fibreuse stockée sur le mandrin d'appel vers le mandrin d'imprégnation du moule d'injection de résine, telle que celle représentée sur la figure 1.

On pourra se référer à la demande de brevet FR 2 974 026 qui décrit en détails la structure et le fonctionnement d'une telle machine.

Brièvement, la machine d'enroulement 10 comprend un bâti 12 supportant notamment un mandrin d'appel 14 et un mandrin d'imprégnation 16. Ces mandrins sont amovibles, c'est-à-dire qu'ils peuvent être démontés du bâti.

Le mandrin d'appel 14 reçoit la texture fibreuse 18 obtenue par exemple par tissage tridimensionnel. Il est porté par un axe horizontal 20 dont une extrémité est montée de façon rotative sur le bâti 12 de la machine d'enroulement et l'autre extrémité est couplée à l'arbre de sortie d'un moteur électrique 22, par exemple un motoréducteur électrique à courant alternatif.

L'ensemble constitué du mandrin d'appel 14, de son axe 20 et de son moteur électrique 22 peuvent translater par rapport au bâti le long de l'axe de rotation du mandrin d'appel. Ce degré de liberté en translation du mandrin d'appel permet de réaliser un alignement de ce mandrin sur le mandrin d'imprégnation préalablement à l'enroulement de la texture fibreuse sur le mandrin d'imprégnation.

Le mandrin d'imprégnation 16 de la machine d'enroulement est destiné à recevoir en couches superposées la texture fibreuse stockée sur le mandrin d'appel. Il présente une surface extérieure 24 dont le profil correspond à celui de la surface interne du carter à réaliser et deux flasques latéraux 26 dont les profils correspondent à ceux des brides externes du carter à ses extrémités amont et aval afin de permettre son montage et sa liaison avec d'autres éléments.

Le mandrin d'imprégnation est porté par un axe horizontal 28 qui est parallèle à l'axe de rotation 20 du mandrin d'appel et dont l'une extrémité est montée de façon rotative sur le bâti 12 de la machine d'enroulement et l'autre extrémité est couplée à l'arbre de sortie d'un moteur électrique 30, par exemple un motoréducteur électrique à courant alternatif.

Une unité de commande 32 est reliée aux moteurs électriques 22, 30 des deux mandrins et permet de commander et contrôler de la vitesse de rotation de chaque mandrin. De manière plus générale, cette unité de commande permet de piloter l'ensemble des paramètres de fonctionnement de la machine d'enroulement, et notamment le déplacement en translation du mandrin d'appel lorsque celui-ci est motorisé.

Avec une telle machine, l'enroulement de la texture fibreuse sur le mandrin d'imprégnation s'effectue de la façon suivante : l'extrémité libre de la texture fibreuse du mandrin d'appel est d'abord fixée sur le mandrin d'imprégnation au moyen d'un ou plusieurs dispositifs de maintien décrits ci-après, puis les moteurs d'entraînement en rotation des mandrins sont activés et pilotés par l'unité de commande de façon à appliquer une tension d'enroulement adéquate sur la texture fibreuse.

Sur la figure 1, la machine d'enroulement 10 comprend deux dispositifs de maintien 100, 100' positionnés à différentes positions angulaires sur le mandrin d'imprégnation au démarrage de l'enroulement. Bien entendu, un seul dispositif peut être suffisant.

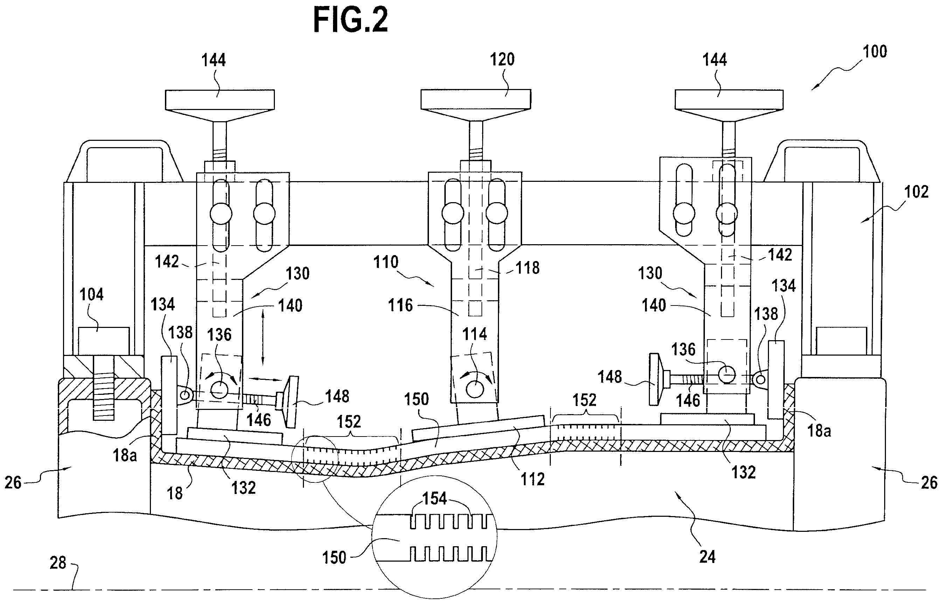

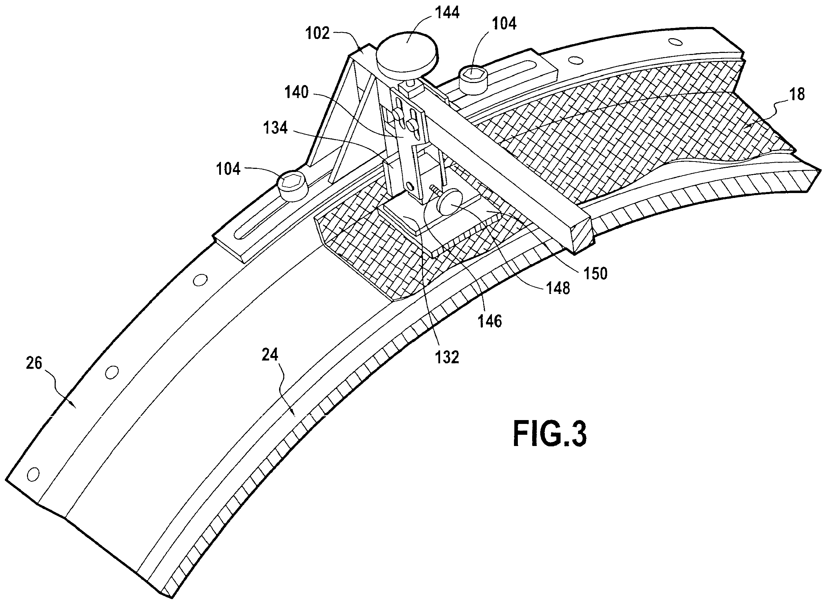

Un dispositif de maintien 100 selon l'invention est illustré plus en détails sur les figures 2 et 3. Il permet d'assurer un maintien de l'extrémité libre de la texture fibreuse sur le mandrin d'imprégnation au démarrage de l'enroulement. En fin d'enroulement, il est également utilisé pour maintenir la texture fibreuse sur le mandrin d'imprégnation avant que celle-ci ne soit coupée à sa longueur finale.

Le dispositif de maintien 100 comprend notamment une traverse 102 formant support dont les deux extrémités sont fixées, par exemple par l'intermédiaire de vis 104, sur les flasques latéraux 26 du mandrin d'imprégnation. Le dispositif de maintien est ainsi rendu amovible.

Cette traverse 102 supporte trois porte-patins ; à savoir un porte-patin central 110 et deux porte-patins latéraux 130.

Le porte-patin central 110 est plus précisément positionné sensiblement à équidistance des deux flasques latéraux 26 du mandrin d'imprégnation. Il comprend un patin 112 monté par une liaison pivot 114 sur un support de patin 116 lui-même fixé sur la traverse. Ce patin est destiné à venir en appui contre la couche de texture fibreuse 18 enroulée sur le mandrin d'imprégnation.

Le porte-patin central 110 comprend également un système vis-écrou composé d'une vis sans fin 118 actionnable par une manivelle de serrage 120 et solidaire du support de patin 116. En pivotant la manivelle 120, il est ainsi possible de faire descendre ou monter le patin 112 par rapport à la traverse, et donc de serrer plus ou moins le patin sur la couche de texture fibreuse.

Quant aux porte-patins latéraux 130, ils sont positionnés au niveau des coins formés entre la surface extérieure 24 les flasques latéraux 26 du mandrin d'imprégnation.

Chaque porte-patin latéral comprend un patin principal 132 destiné à venir en appui contre la couche de texture fibreuse 18 enroulée sur le mandrin d'imprégnation et un patin latéral 134 destiné à venir en appui contre un bord latéral 18a de la couche de texture fibreuse 18. Ces deux patins 132, 134 sont montés par des liaisons pivot, respectivement 136 et 138, sur un support de patin 140 lui-même fixé sur la traverse 102.

Chaque porte-patin latéral comprend également un système vis-écrou composé d'une vis sans fin 142 actionnable par une manivelle de serrage 144 et solidaire du support de patin 140. En pivotant la manivelle 144, il est ainsi possible de faire descendre ou monter le patin principal 132 par rapport à la traverse, et donc de serrer plus ou moins le patin sur la couche de texture fibreuse.

Le patin latéral 134 est également réglable au moyen d'un système vis-écrou composé d'une vis sans fin 146 actionnable par une manivelle de serrage latérale 148 et solidaire du support de patin 140. En pivotant cette manivelle 148, il est ainsi possible de déplacer latéralement le patin latéral 134 par rapport au flasque latéral du mandrin d'imprégnation, et donc de serrer plus ou moins le patin latéral sur le bord latéral 18a de la couche de texture fibreuse.

Comme représenté sur la figure 2, une plaque de répartition de pression 150 est avantageusement intercalée entre les patins 112, 132 et la couche de texture fibreuse 18 enroulée sur le mandrin d'imprégnation. La présence de cette plaque permet d'assurer une répartition de la pression de serrage exercée par les patins sur toute la largeur de la couche de texture fibreuse.

Cette plaque 150 est réalisée en matière plastique, par exemple en polyamide ou en polytétrafluoroéthylène, et présente une épaisseur suffisante pour assurer, du fait de sa rigidité, la transmission de la pression de serrage dans les zones de la couche de texture fibreuse non couvertes par les patins 112, 132. A titre d'exemple, cette épaisseur pourra être de l'ordre de 10mm environ.

Par ailleurs, il convient d'assurer cependant une certaine flexibilité de la plaque dans des zones où le profil de la surface extérieure du mandrin d'imprégnation n'est pas linéaire de façon à lui permettre d'épouser parfaitement le profil de la surface extérieure du mandrin d'imprégnation.

A cet effet, la plaque de répartition de pression 150 comprend des zones flexibles 152 délimitées entre les patins 112, 132, ces zones étant rendues flexibles par exemple en pratiquant des rainures 154 dans l'épaisseur de la plaque. A titre d'exemple, pour une plaque d'épaisseur de 10mm environ, ces rainures pourront avoir une largeur de 1mm et une profondeur de 3mm. Par ailleurs, ces rainures pourront être pratiquées d'un seul ou des deux côtés de la plaque.

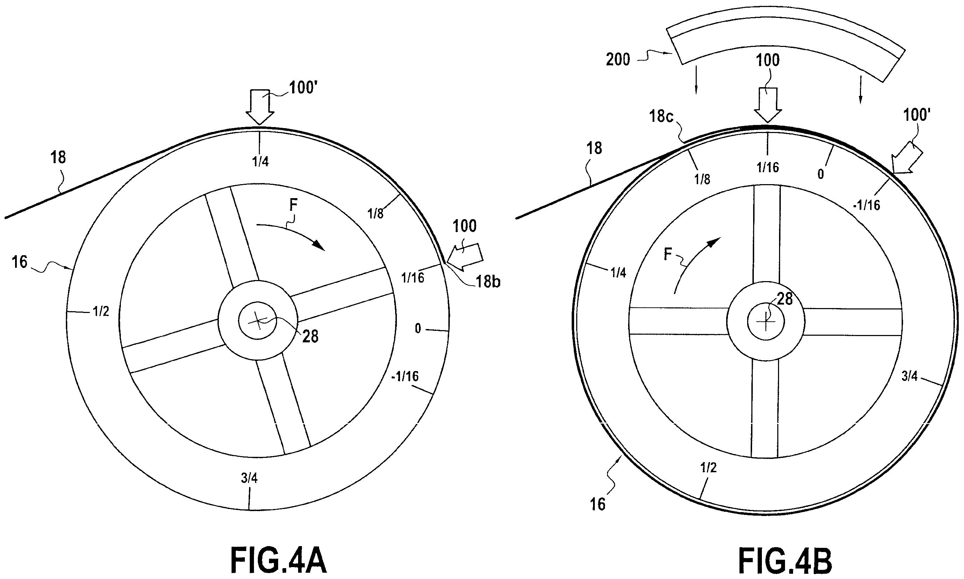

En liaison avec les figures 4A et 4B, on décrira maintenant comment peuvent être positionnés deux dispositifs de maintien 100, 100' conformes à l'invention sur le mandrin d'imprégnation 16 d'une machine d'enroulement au cours des différentes étapes d'enroulement de la texture fibreuse sur ce mandrin.

Sur ces figures, le sens de rotation du mandrin 16 est illustré par la flèche F et l'enroulement de la texture fibreuse sur ce mandrin nécessitera de réaliser 4 tours 1/8 pour obtenir une préforme de carter ayant une épaisseur conforme aux spécifications.

La figure 4A représente la configuration au démarrage de l'enroulement. Au préalable, l'extrémité libre 18b de la couche de texture fibreuse est positionnée au niveau du repère +1/16 du mandrin 16, celui-ci étant situé angulairement à midi. Un premier dispositif de maintien 100 conforme à l'invention est ensuite positionné sur le mandrin au niveau de ce même repère +1/16 puis le mandrin est pivoté dans le sens de la flèche F pour être amené dans la position angulaire représentée par la figure 4A. Le second dispositif de maintien 100' conforme à l'invention est alors positionné sur le mandrin au niveau du repère ¼. Cette configuration permet d'obtenir une mise sous tension optimale de la texture fibreuse pour pouvoir débuter l'enroulement. L'enroulement de la texture fibreuse sur un peu plus de 4 tours peut alors débuter (bien entendu, les dispositifs de maintien 100, 100' sont retirés avant le second tour).

De façon avantageuse, afin d'optimiser l'adhérence de la couche de texture fibreuse sur le mandrin, une colle peut être déposée sur la surface extérieure du mandrin préalablement à la dépose de l'extrémité libre de la couche de texture fibreuse. Par exemple, cette colle pourra être constituée de résine époxy (sans catalyseur) et d'un solvant.

La figure 4B représente la configuration en fin d'enroulement. Lorsque la préforme fibreuse est encore en tension entre le mandrin d'appel (non représenté) et le mandrin d'imprégnation 16, un premier 100 et un second 100' dispositifs de maintien conformes à l'invention sont positionnés sur le mandrin, respectivement au niveau du repère 1/16 et au niveau du repère -1/16. Le découpage de la texture fibreuse peut alors être réalisé (au niveau du repère 1/8 où la référence 18c correspond à la fin de l'enroulement de la texture fibreuse).

Cette configuration permet de maintenir en tension la préforme par le second dispositif de maintien 100' lorsqu'il sera nécessaire de retirer le premier dispositif de maintien 100 pour venir mettre en place le premier secteur angulaire 200 de fermeture du moule d'injection de résine sur le mandrin d'imprégnation. Une fois ce secteur angulaire mis en place sur le mandrin, le second dispositif de maintien 100' est retiré et les autres secteurs angulaire de fermeture du moule peuvent à leur tour être mis en place.

## Revendications

1. Dispositif (100, 100') de maintien d'une texture fibreuse sur un mandrin d'imprégnation (16) d'une machine d'enroulement (10), comprenant :
une traverse (102) formant support dont chaque extrémité est destinée à être fixée sur l'un des flasques latéraux (26) du mandrin ;
un porte-patin central (110) monté sur la traverse et muni d'un patin (112) destiné à venir en appui contre une couche de texture fibreuse (18) enroulée sur le mandrin ;
deux porte-patins latéraux (130) montés sur la traverse et muni chacun d'un patin principal (132) destiné à venir en appui contre la couche de texture fibreuse enroulée sur le mandrin et d'un patin latéral (134) destiné à venir en appui contre un bord latéral (18a) de la couche de texture fibreuse enroulée sur le mandrin ; et
des moyens pour exercer un effort de serrage des patins sur la couche de texture fibreuse enroulée sur le mandrin,
chaque patin étant fixé au porte-patin par un système vis-écrou actionnable par une manivelle de serrage (120, 144, 148) de façon à pouvoir exercer un effort de serrage dudit patin sur la couche de texture fibreuse enroulée sur le mandrin.

2. Dispositif selon la revendication 1, comprenant en outre une plaque de répartition de pression (150) destinée à être intercalée entre les patins et la couche de texture fibreuse enroulée sur le mandrin.

3. Dispositif selon la revendication 2, dans lequel la plaque de répartition de pression (150) comprend des zones flexibles (152) de façon à lui permettre d'épouser le profil de la surface extérieure du mandrin.

4. Dispositif selon la revendication 3, dans lequel la plaque de répartition de pression (150) est réalisée dans un matériau plastique et les zones flexibles (152) présentent des rainures (154) pratiquées dans l'épaisseur de la plaque.

5. Machine d'enroulement (10) d'une texture fibreuse sur un mandrin d'imprégnation, comprenant :
un mandrin d'appel (14) sur lequel est destiné à être stockée une texture fibreuse (18) obtenue par tissage tridimensionnel, le mandrin d'appel ayant un axe de rotation (20) sensiblement horizontal ;
un mandrin d'imprégnation (16) sur lequel est destinée à être enroulée en couches superposées la texture fibreuse stockée sur le mandrin d'appel, le mandrin d'imprégnation ayant un axe de rotation (28) sensiblement horizontal et parallèle à l'axe de rotation du mandrin d'appel ;
des moteurs électriques (22, 30) pour entraîner en rotation les mandrins autour de leur axe de rotation respectif ;
une unité de commande (32) des moteurs électriques d'entraînement en rotation des mandrins ; et
au moins un dispositif de maintien (100, 100') de la texture fibreuse sur le mandrin d'imprégnation selon l'une quelconque des revendications 1 à 4.

6. Machine selon la revendication 5, comprenant deux dispositifs de maintien (100, 100') de la texture fibreuse sur le mandrin d'imprégnation, lesdits dispositifs étant espacés angulairement l'un de l'autre autour de l'axe de rotation du mandrin d'imprégnation.

## Patentansprüche

1. Vorrichtung (100, 100') zum Halten einer Faserstruktur auf einem Imprägnierdorn (16) einer Wickelmaschine (10), umfassend:
eine einen Halter bildende Traverse (102), von der jedes Ende dazu bestimmt ist, an einem der Seitenflansche (26) des Dorns befestigt zu werden,
einen mittleren Schuhhalter (110), der an der Traverse angebracht ist und mit einem Schuh (112) versehen ist, welcher dazu bestimmt ist, an einer auf den Dorn gewickelten Faserstrukturschicht (18) in Anlage zu gelangen,
zwei seitliche Schuhhalter (130), die an der Traverse angebracht sind und jeweils mit einem Hauptschuh (132), welcher dazu bestimmt ist, an der auf den Dorn gewickelten Faserstrukturschicht in Anlage zu gelangen, und mit einem Seitenschuh (134), welcher dazu bestimmt ist, an einem Seitenrad (18a) der auf den Dorn gewickelten Faserstrukturschicht in Anlage zu gelangen, versehen sind, und
Mittel zum Ausüben einer Klemmkraft der Schuhe auf die auf den Dorn gewickelte Faserstrukturschicht,
wobei jeder Schuh an dem Schuhhalter über ein Schraube-Mutter-System befestigt ist, das durch ein Klemmhandrad (120, 144, 148) betätigbar ist, um eine Klemmkraft des Schuhs auf die auf den Dorn gewickelte Faserstrukturschicht auszuüben.

2. Vorrichtung nach Anspruch 1, ferner umfassend eine Druckverteilungsplatte (150), die dazu bestimmt ist, zwischen den Schuhen und der auf den Dorn gewickelten Faserstrukturschicht eingefügt zu werden.

3. Vorrichtung nach Anspruch 2, bei der die Druckverteilungsplatte (150) flexible Bereiche (152) aufweist, um ihr zu ermöglichen, sich dem Profil der Außenfläche des Dorns anzupassen.

4. Vorrichtung nach Anspruch 3, bei der die Druckverteilungsplatte (150) aus einem Kunststoffmaterial hergestellt ist und die flexiblen Bereiche (152) Nuten (154) aufweisen, welche in der Dicke der Platte ausgebildet sind.

5. Maschine zum Aufwickeln (10) einer Faserstruktur auf einen Imprägnierdorn, umfassend:
einen Bereitstellungsdorn (14), auf dem eine durch dreidimensionales Weben erhaltene Faserstruktur (18) gelagert werden soll, wobei der Bereitstellungsdorn eine im Wesentlichen horizontale Rotationsachse (20) aufweist,
einen Imprägnierdorn (16), auf den die Faserstruktur, welche auf dem Bereitstellungsdorn gelagert ist, in übereinander angeordneten Lagen gewickelt werden soll, wobei der Imprägnierdorn eine Rotationsachse (28) aufweist, die im Wesentlichen horizontal ist und zu der Rotationsachse des Bereitstellungsdorns parallel verläuft,
Elektromotoren (22, 30), um die Dorne um ihre jeweilige Rotationsachse drehend anzutreiben,
eine Einheit zur Betätigung (32) der Elektromotoren zum Drehantreiben der Dorne, und
wenigstens eine Vorrichtung (100, 100') zum Halten der Faserstruktur auf dem Imprägnierdorn nach einem der Ansprüche 1 bis 4.

6. Maschine nach Anspruch 5, umfassend zwei Vorrichtungen (100, 100') zum Halten der Faserstruktur auf dem Imprägnierdorn, wobei die Vorrichtungen um die Rotationsachse des Imprägnierdorns winkelmäßig voneinander beabstandet sind.

## Claims

1. A device (100, 100') for holding a fiber texture on an impregnation mandrel (16) of a winding machine (10), the device comprising:
a cross-member (102) forming a support having each of its ends for fastening on one of the cheekplates (26) of the mandrel;
a central pad carrier (110) mounted on the cross-member and provided with a pad (112) for pressing against a fiber texture layer (18) wound on the mandrel;
two lateral pad carriers (130) mounted on the cross-member and each provided with a main pad (132) for pressing against the fiber texture layer wound on the mandrel and a lateral pad (134) for pressing against a lateral margin (18a) of the fiber texture layer wound on the mandrel; and
means for exerting a clamping force urging the pads against the fiber texture layer wound on the mandrel, each pad being fastened to the pad carrier by a screw- and-nut system that can be actuated by a clamping handle (120, 144, 148) so as to exert a force for clamping said pad against the fiber texture layer wound on the mandrel.

2. A device according to claim 1, further comprising a pressure distribution plate (150) for interposing between the pads and the fiber texture layer wound on the mandrel.

3. A device according to claim 2, wherein the pressure distribution plate (150) has flexible zones (152) so as to enable it to fit closely to the profile of the outer surface of the mandrel.

4. A device according to claim 3, wherein the pressure distribution plate (150) is made of a plastics material and the flexible zones (152) present grooves (154) formed in the thickness of the plate.

5. A machine (10) for winding a fiber texture onto an impregnation mandrel, the machine comprising:
a take-up mandrel (14) for storing a fiber texture (18) obtained by three-dimensional weaving, the take-up mandrel having a substantially horizontal axis of rotation (20) ;
an impregnation mandrel (16) onto which the fiber texture stored on the take-up mandrel is to be wound in superposed layers, the impregnation mandrel having an axis of rotation (28) that is substantially horizontal and parallel to the axis of rotation of the take-up mandrel;
electric motors (22, 30) for driving the mandrels in rotation about their respective axes of rotation;
a control unit (32) for controlling the electric motors for driving rotation of the mandrels; and
at least one holder device (100, 100') according to any one of claims 1 to 4 for holding the fiber texture on the impregnation mandrel.

6. A machine according to claim 5, including two holder devices (100, 100') for holding the fiber texture on the impregnation mandrel, said devices being angularly spaced apart from each other about the axis of rotation of the impregnation mandrel.
